# DEMANDE DE BREVET EUROPEEN

(11) **EP 4 470 923 A1**
(43) Date de publication de la demande: **04.12.2024**
(21) Numéro de dépôt: 24179012.0
(22) Date de dépôt: 30.05.2024
(51) Int. Cl.: B64D 37/02, B64D 37/32

(54) **STRUCTURE COMPOSITE FLEXIBLE, DISPOSITIF DE RÉTENTION D'UN CARBURANT D'AÉRONEF, RÉSERVOIR DE CARBURANT ET AÉRONEF L' INCORPORANT**

(30) Priorité: 01.06.2023 FR 2305506
(71) Demandeur: JPR, 75008 Paris (FR)
(72) Inventeur: TUFFERY, Romain, 80080 AMIENS (FR); FONTAINE, Hervé, 80080 AMIENS (FR); DA COSTA, Jérémy, 80080 AMIENS (FR)
(74) Mandataire: Plasseraud IP

(57) **Abrégé**

L'invention concerne une structure composite flexible configurée pour former à l'état déployé un dispositif de rétention d'un carburant d'aéronef, ce dispositif de rétention l'incorporant qui est configuré pour être monté à l'intérieur et à distance d'une paroi d'un réservoir d'aéronef contenant le carburant, ce réservoir et cet aéronef.

La structure (9) est telle qu'en cas de perforation de la paroi, le dispositif de rétention retarde ou réduise la fuite de carburant hors du réservoir, la structure étant configurée pour que sa surface externe (Se) soit montée à proximité immédiate et en suivant le contour de la paroi, la structure comprenant un corps élastomère (9A) constitué d'une composition de caoutchouc et une armature de renforcement (9B) noyée dans le corps élastomère.

Selon l'invention, la structure (9) comprend en outre une armature antifeu (9C) qui est noyée dans le corps élastomère à distance de l'armature de renforcement, la composition de caoutchouc étant à base d'au moins un caoutchouc fluorosilicone.

## Description

### Domaine technique

L'invention concerne une structure composite flexible configurée pour former à l'état déployé un dispositif de rétention d'un carburant d'aéronef, ce dispositif de rétention l'incorporant qui est configuré pour être monté à l'intérieur et à distance d'une paroi d'un réservoir d'aéronef contenant le carburant, un tel réservoir et un aéronef l'incorporant. L'invention s'applique à un dispositif de rétention de type « liner » (garnissage flexible), qui est monté suspendu à distance de la paroi d'un réservoir de carburant d'un aéronef, tel qu'un avion aérien ou spatial, notamment.

### Technique antérieure

De manière connue, les réservoirs de carburant d'aéronefs sont pourvus de dispositifs pour protéger l'aéronef et ses passagers contre les fuites de carburant lors d'une perforation du réservoir en cas de crash ou d'autre choc. En effet, une quantité importante de carburant échappée du réservoir peut alors se répandre hors de celui-ci dans une zone à risque de l'aéronef et être à l'origine d'un départ de feu susceptible de s'opposer à l'évacuation des passagers.

Pour assurer une protection contre les fuites de carburant hors d'un réservoir d'aéronef endommagé par un choc lors d'un accident, il est en particulier connu de suspendre un garnissage flexible ou « liner » à l'intérieur de la paroi du réservoir, afin de retenir le plus longtemps possible le carburant dans le réservoir et ainsi de réduire ou au moins retarder la fuite de carburant, de sorte à permettre une évacuation des passagers de l'aéronef.

US 5,983,945 A présente un tel « liner » pour réservoir de carburant d'aéronef, qui limite la quantité de carburant répandue en cas de crash. Ce garnissage, réalisé en un caoutchouc Néoprène^{®} de préférence renforcé par des fils en Nylon@, est suspendu à l'intérieur du réservoir à partir d'un cadre ou de la paroi du réservoir. En fonctionnement normal, le « liner » flotte dans le carburant.

Un inconvénient majeur du « liner » présenté dans US 5,983,945 A est, d'une part, que sa matrice élastomère en Néoprène^{®} ne permet pas de lui conférer une flexibilité et une résistance suffisantes dans la durée, à des basses et hautes températures, à un carburant d'aviation durable « SAF » (« sustainable Aviation Fuel ») telque le JET-A1, et, d'autre part, que son renforcement par du Nylon^{®} n'est pas adapté pour lui conférer une résistance suffisante à la pression du carburant et au déchirement par des bords tranchants du réservoir perforé.

Un autre inconvénient du « liner » présenté dans US 5,983,945 A est qu'il présente une résistance au feu insuffisante, étant aisément inflammable.

### Exposé de l'invention

Un but de la présente invention est de proposer une structure composite flexible configurée pour former à l'état déployé un dispositif de rétention d'un carburant d'aéronef, le dispositif étant monté à l'intérieur et à distance d'une paroi d'un réservoir d'aéronef contenant le carburant, de sorte qu'en cas de perforation de la paroi, le dispositif retarde ou réduise la fuite de carburant hors du réservoir, la structure composite présentant une surface interne destinée à être au contact du carburant et une surface externe, et étant configurée après mise en forme et déploiement pour que la surface externe soit montée à proximité immédiate et en suivant le contour de la paroi du réservoir,
la structure composite comprenant un corps élastomère constitué d'une composition de caoutchouc et une armature de renforcement noyée dans ce corps, qui remédie notamment aux inconvénients précités.

A cet effet, une structure composite flexible selon l'invention comprend en outre une armature antifeu qui est noyée (i.e. encapsulée) dans le corps élastomère à distance de l'armature de renforcement, la composition de caoutchouc étant à base d'au moins un caoutchouc fluorosilicone.

On notera qu'en cas de perforation du réservoir, la structure composite flexible permet, une fois déployée à l'intérieur du réservoir en suivant à distance le contour de sa paroi, de retenir efficacement le carburant au moins dans une première phase de rétention, afin de minimiser le risque de fuite initiale d'une grande quantité de carburant susceptible de provoquer un incendie à bord de l'aéronef, et ainsi d'évacuer en toute sécurité les passagers pendant cette phase de rétention du carburant qui retarde ou réduit sa fuite d'une manière significative.

On notera également que le corps élastomère selon l'invention, qui encapsule l'armature de renforcement et l'armature antifeu, permet non seulement de relier ces armatures entre elles, mais encore :
- grâce à la matrice spécifiquement fluorosilicone du corps élastomère, d'être durablement flexible dans une large plage de températures en fonctionnement de l'aéronef incluant des basses températures (variant de -55 à 80° C), et de contribuer à la résistance au feu de la structure, et
- grâce aux armatures de renforcement et antifeu noyées dans cette matrice fluorosilicone, de conférer à la structure composite flexible selon l'invention une résistance mécanique et une résistance au feu nettement améliorées, en comparaison de celles procurées par les « liners » existants, tels que ceux présentés dans US 5,983,945 A.

On notera en outre que la structure composite flexible selon l'invention est conçue pour présenter, une fois mise en forme puis déployée à l'intérieur du réservoir au contact du carburant, une géométrie compacte (i.e. non expansible) suite à une perforation de la paroi du réservoir, contrairement aux dispositifs de type vessie (« bladder ») ou revêtements d'étanchéité auto-obturants (« self-sealant »), dont se distingue le dispositif de rétention incorporant la structure de l'invention.

Par « composition de caoutchouc étant à base d'au moins un caoutchouc fluorosilicone », on entend dans la présente description une composition de caoutchouc réticulée dont la matrice élastomère comprend un ou plusieurs caoutchoucs fluorosilicone(s) (FVMQ en abrégé) à plus de 50 % en poids, de préférence à plus de 75 % en poids et plus préférentiellement à 100 % en poids. En d'autres termes, la matrice élastomère peut comprendre majoritairement en poids un ou plusieurs fluorosilicone(s) et minoritairement en poids au moins un autre caoutchouc autre qu'un fluorosilicone, ou bien de préférence être exclusivement constituée du ou des fluorosilicone(s). A titre dudit au moins un autre caoutchouc minoritaire autre qu'un fluorosilicone, on peut utiliser un caoutchouc silicone, tel qu'un caoutchouc silicone (VMQ en abrégé pour vinyl méthyl silicone) ou un phényl-vinyl-méthyl silicone (terpolymère phénylmethyl-, vinylméthyl- et diméthylsiloxane, PVMQ en abrégé).

Comme expliqué dans la suite de la présente description, la composition de caoutchouc réticulée formant le corps élastomère selon l'invention comprend en particulier, en plus de la matrice élastomère à base dudit au moins un fluorosilicone, un système de réticulation et d'autres additifs.

Selon une autre caractéristique générale de l'invention, l'armature antifeu est de préférence située entre l'armature de renforcement et la surface externe.

On notera que le positionnement de l'armature antifeu adjacent à la surface externe de la structure, de sorte que l'armature de renforcement soit adjacente à la surface interne de cette structure, permet d'améliorer encore la résistance au feu de ladite structure, sans pénaliser sa résistance mécanique.

Selon une autre caractéristique préférentielle de l'invention, la surface interne et la surface externe sont constituées de la composition de caoutchouc.

En d'autres termes, non seulement les armatures de renforcement et antifeu sont alors noyées dans la masse du corps élastomère, mais en outre la structure composite flexible selon l'invention peut avantageusement être dépourvue de toute couche, revêtement ou nappe non élastomère (étant e.g. dépourvue de couche textile, carbonée ou minérale) en sa surface interne et sa surface externe.

On notera qu'une structure composite flexible selon l'invention peut être avantageusement constituée (i.e. exclusivement) dudit corps élastomère (lequel peut être formé d'une unique couche de la composition de caoutchouc) et des armatures de renforcement et antifeu noyées dans ledit corps.

Selon un premier aspect de l'invention, l'armature de renforcement peut comprendre au moins une nappe de renforcement textile qui est tissée ou tricotée, de préférence tissée à partir d'un fil continu et satisfaisant à l'une au moins des conditions suivantes :
- une masse surfacique d'au moins 250 g/m², mesurée selon ISO 9073-1 ;
- une résistance à la rupture en traction dans les sens de chaîne et de trame, respectivement d'au moins 1100 daN/5 cm et 1200 daN/5 cm, mesurée selon ISO 13 934-1 ; et
- une résistance à l'éclatement d'au moins 15.10⁵ Pa, mesurée selon ISO 13 938-1.

De préférence, ladite au moins une nappe de renforcement textile comprend au moins un fil d'un polyamide (semi) aromatique, de préférence choisi parmi les polyarylamides, les poly(métaxylylène adipamide), les polyphtalamides, les polyamides semi-aromatiques amorphes, les méta-aramides, les para-aramides et des combinaisons d'au moins deux de ces polyamides (semi) aromatiques.

A titre plus préférentiel, ladite au moins une nappe de renforcement textile est constituée d'au moins un fil d'un polyamide aromatique, étant par exemple constituée de PPTA (para-aramide, ou poly(paraphénylène téréphtalamide)).

On notera que ladite moins une nappe de renforcement textile (e.g. telle que définie ci-dessus par le(s) fil(s) d'un polyamide aromatique) permet de conférer à la structure composite de l'invention
- une résistance suffisante à la pression du carburant, et
- une résistance suffisante au déchirement, lors du contact de la structure avec des bords tranchants de la paroi du réservoir lors de la perforation de cette paroi.

Selon un deuxième aspect de l'invention pouvant être combiné audit premier aspect, l'armature antifeu peut comprendre au moins une nappe antifeu minérale de type tissée ou tricotée, étant de préférence tissée et satisfaisant à l'une au moins des conditions suivantes à l'état imprégné :
- une masse surfacique d'au moins 250 g/m², mesurée selon ISO 3801 ;
- une résistance à la rupture en traction dans les sens de chaîne et de trame, respectivement d'au moins 800 N/ 25 mm et d'au moins 600 N/25 mm, mesurée selon ISO 4606 ;
- un allongement à la rupture, dans les sens de chaîne et de trame, respectivement d'au moins 4 % et 5 %, mesuré selon ISO 13 934-1 ; et
- une résistance à l'éclatement d'au moins 750 kPa pour un diamètre d'éprouvette de 30,5 mm, mesurée selon ISO 13 938-1.

De préférence, ladite au moins une nappe antifeu comprend des fibres de silice et/ou d'une céramique (e.g. céramique par exemple de Si-AI ou d'Al₂O₃), de préférence un fil continu de silice selon une fraction massique de SiO₂ supérieure à 95 % dans ladite au moins une nappe.

A titre plus préférentiel, ladite au moins une nappe antifeu est constituée desdites fibres de silice.

On notera que ladite au moins une nappe antifeu ainsi définie contribue à conférer à la structure composite flexible de l'invention une tenue satisfaisante au feu (par exemple testée via un brûleur de carburant JET A-1), ainsi que, comme cela sera détaillé ci-après, une étanchéité satisfaisante mesurée par un taux de fuite à l'eau, après avoir été soumise à une flamme de kérosène, et une durée non inflammable satisfaisante en tests d'inflammabilité verticale et horizontale.

Avantageusement selon les premier et deuxième aspects précités, les armatures de renforcement et antifeu peuvent respectivement être constituées d'une unique nappe de fil(s) d'un polyamide (semi) aromatique et d'une unique nappe de fibres de silice.

Selon un troisième aspect de l'invention pouvant être combiné audit premier aspect et/ou audit deuxième aspect, la composition de caoutchouc peut comprendre:
- ledit au moins un caoutchouc fluorosilicone, par exemple selon une fraction massique de 80 à 88 %,
- des charges électriquement conductrices comprenant e.g. des nanoparticules de carbone, de préférence selon une fraction massique de 10 à 15 % ;
- un système retardateur de flamme comprenant au moins un agent ignifugeant, de préférence selon une fraction massique de 0,5 à 2 % ; et
- un système de réticulation comprenant par exemple un agent de réticulation au peroxyde (e.g. un peroxyde organique aromatique), de préférence selon une fraction massique de 0,5 à 5 % et par exemple de 1,7 à 3 %.

A titre d'agent ignifugeant, on peut par exemple citer les charges inorganiques de type quartz, les oxydes et hydroxydes métalliques, les composés de type polysiloxanes à terminaisons vinyliques, ou les complexes polysiloxanes/platine.

On notera que cette composition de caoutchouc permet de relier les armatures entre elles en étant durablement flexible à des températures de fonctionnement du réservoir pouvant varier de -55 à 80° C, et que les nanoparticules de carbone qu'elle comprend préférentiellement permettent en outre d'assurer une dissipation efficace des charges électrostatiques.

Avantageusement et optionnellement en combinaison avec tout ou partie des caractéristiques ci-dessus de l'invention, la composition de caoutchouc peut satisfaire, à l'état réticulé, à l'une au moins des conditions suivantes :
- une résistance à la rupture moyenne d'au moins 2,5 MPa, mesurée en traction uni-axiale selon la norme ISO 37:2017,
- un allongement à la rupture moyen d'au moins 300 %, mesuré en traction uni-axiale selon la norme ISO 37:2017,
- des modules sécants à 50 %, 100 % et 200 % de déformation respectivement d'au moins 0,8 MPa, 1,0 MPa et 1,8 MPa, mesurés en traction uni-axiale selon la norme ISO 37:2017, et
- une dureté Shore A comprise entre 50 et 60, mesurée selon mesurée selon la norme ASTM D 2240.

On notera que ces propriétés mécaniques de la composition de caoutchouc sont particulièrement bien adaptées pour que le corps élastomère constitué de cette composition confère à la structure composite flexible selon l'invention des propriétés satisfaisantes pour son montage à l'intérieur du réservoir et en fonctionnement, y compris en cas de perforation de la paroi du réservoir, comme cela sera détaillé ci-après.

Avantageusement et optionnellement en combinaison avec tout ou partie des caractéristiques ci-dessus de l'invention, ladite structure composite flexible peut satisfaire, à l'état réticulé, à l'une au moins des conditions suivantes :
- une résistance à la perforation selon TSO-C80 § 16 supérieure à 1650 N ;
- une résistance au feu selon ISO 2685 :1998 ou AC 20-135 de la FAA via un brûleur de carburant JET A-1 qui est d'au moins 5 minutes ;
- une étanchéité mesurée par un taux de fuite à l'eau, après avoir été soumise à une flamme de kérosène de 92 kW/m², qui est d'au moins 5 minutes ;
- une durée non inflammable selon FAR 25-853 Appendix F partie 1 en test d'inflammabilité verticale selon (a1)(ii) et horizontale selon (a1)(iv), qui est d'au moins 12 secondes et d'au moins 15 secondes d'inflammation, respectivement;
- une résistivité électrique surfacique qui est inférieure à 10 GΩ.carré ; et
- après vieillissement pendant 1000 heures à 70° C dans un carburant JET A-1, un gonflement en sortie de fluide, selon la norme NF ISO 1817, qui est inférieur à 30 % en volumique et qui est inférieur à 20 % en masse.

On notera que ces caractéristiques témoignent notamment de propriétés très satisfaisantes de résistance mécanique, de résistance au feu (cf. en particulier la durée non inflammable obtenue qui témoigne d'une absence de flamme résiduelle à l'issue des tests d'inflammabilité), de dissipation des charges électrostatiques et de résistance au gonflement après vieillissement, qui confèrent au dispositif de rétention selon l'invention incorporant la structure composite flexible une durée de vie élevée en dépit des contraintes de fonctionnement et de perforation ou de feu spécifiques aux aéronefs.

Selon un autre aspect de l'invention optionnellement combiné à tout ou partie des caractéristiques ci-dessus, un dispositif de rétention selon l'invention d'un carburant d'aéronef est tel que défini ci-après.

Ce dispositif de rétention est configuré pour être monté à l'intérieur et à distance d'une paroi d'un réservoir d'aéronef contenant le carburant, de sorte qu'en cas de perforation de la paroi, le dispositif de rétention baignant dans le carburant retarde ou réduise la fuite de carburant hors du réservoir, et ce dispositif comprend :
- ladite structure composite flexible telle que définie ci-dessus, qui a été mise en forme, par exemple par calandrage et moulage, puis déployée suivant le contour d'une face interne de la paroi, et
- des moyens de fixation de la structure composite flexible à la face interne de la paroi.

Ces moyens de fixation, qui peuvent être amovibles, comprennent de préférence, de la paroi du réservoir vers l'intérieur de la structure composite flexible :
des pattes de fixation par exemple en forme d'équerre qui sont fixées sur une face interne de la paroi du réservoir et qui présentent des orifices de fixation,
des oeillets de fixation qui équipent la structure composite flexible et qui sont configurés pour être disposés en regard et au contact des orifices de fixation,
des profilés de serrage qui sont montés sur la structure composite flexible et qui présentent des ouvertures de serrage configurées pour être disposées en regard et au contact des oeillets de fixation, et
des organes mâles de serrage, tels que des boulons, qui traversent successivement les pattes de fixation, la structure composite flexible et les profilés de serrage via les orifices de fixation, les oeillets de fixation et les ouvertures de serrage, respectivement.

On notera que l'on pourrait prévoir des moyens de fixation de la structure composite flexible à la face interne de la paroi du réservoir d'un autre type, i.e. présentant d'autre organes de fixation que les pattes, oeillets, profilés et/ou organes de serrage, sans sortir du cadre de l'invention.

Selon un autre aspect général de l'invention, le dispositif de rétention peut être tel que la structure composite flexible, une fois mise en forme et déployée, présente :
- une ouverture d'accès de type trou d'homme configurée pour être positionné en regard d'une trappe d'accès équipant la paroi du réservoir, et
- une aptitude à être repliée et/ou enroulée de manière réversible pour la faire passer par l'ouverture d'accès (e.g. un trou d'homme), puis pour la déployer à l'intérieur du réservoir.

Selon encore un autre aspect de l'invention optionnellement combiné à tout ou partie des caractéristiques ci-dessus, un réservoir de carburant selon l'invention, qui est configuré pour équiper un aéronef comprenant un fuselage à l'intérieur duquel est prévue une cabine pour les passagers, comprend
- une paroi externe rigide de type métallique ou composite, qui délimite un compartiment pour le carburant, et
- le dispositif de rétention selon l'invention tel que défini ci-dessus, qui est maintenu par lesdits moyens de fixation à proximité immédiate de la paroi avec un espacement moyen entre la surface externe de la structure composite flexible et la face interne de la paroi qui est compris entre 1 mm et 10 mm, de préférence entre 2 mm et 8 mm.

On notera que cet espacement moyen entre la structure composite flexible selon l'invention et la face interne de la paroi du réservoir est ainsi minimisé tout en étant non nul (de sorte que la structure composite flexible ne soit pas appliquée contre la paroi du réservoir en fonctionnement normal du réservoir, i.e. en l'absence de perforation de la paroi de ce dernier), ce qui se traduit par le fait que le volume interstitiel, minimisé entre la structure et la paroi, peut réduire de manière significative la quantité de carburant non retenue par ladite structure en cas de perforation de ladite paroi. En effet, la structure subit alors la pression du carburant du fait de cette perforation, cette pression dirigée vers l'extérieur du réservoir ayant pour effet d'amener la structure à épouser le contour de la face interne de la paroi.

On notera ainsi que le dispositif de rétention selon l'invention, à la différence d'une vessie interne (« bladder ») ou d'un garnissage d'étanchéité auto-obturant (« self-sealant »), est suspendu à l'intérieur du réservoir en baignant au moins en partie dans le carburant, à proximité immédiate mais à distance de la paroi du réservoir en fonctionnement normal de ce dernier (seuls lesdits moyens de fixation de la structure composite flexible à la paroi du réservoir étant alors montés au contact de cette paroi).

Selon encore un autre aspect du réservoir de l'invention optionnellement combiné à tout ou partie des caractéristiques ci-dessus, le dispositif de rétention peut être ouvert en l'un au moins de ses côtés en regard de la paroi du réservoir, le dispositif de rétention étant agencé en regard d'une zone de fond et de zones latérales de la paroi et étant de préférence ouvert en regard d'une zone supérieure de la paroi, ladite zone supérieure étant configurée pour être disposée à l'intérieur du fuselage de l'aéronef et en dessous de la cabine.

On notera que dans ce réservoir préférentiel de l'invention, le dispositif de rétention est ainsi dépourvu de la structure composite flexible en son côté supérieur tourné vers la zone supérieure de la paroi du réservoir adjacente à la cabine, laquelle zone supérieure de la paroi est moins susceptible d'être perforée en cas d'accident.

Selon encore un autre aspect de l'invention optionnellement combiné à tout ou partie des caractéristiques ci-dessus, un aéronef selon l'invention comprend un fuselage, des ailes et au moins un réservoir de carburant tel que défini ci-dessus qui est logé à l'intérieur du fuselage, de préférence à la jonction du fuselage avec l'une des ailes.

De préférence, l'aéronef de l'invention est tel que ledit au moins un réservoir présente une zone latérale (i.e. autre que ladite zone supérieure et qu'une zone de fond opposée de la paroi du réservoir) de ladite paroi du réservoir qui est délimitée par le fuselage ou est adjacente au fuselage.

On notera qu'une telle localisation dudit au moins un réservoir de carburant à l'intérieur de l'aéronef est présentée à titre nullement limitatif, i.e. que le réservoir ou l'un des réservoirs selon l'invention pourrait être localisé ailleurs dans l'aéronef.

D'autres caractéristiques, avantages et détails de la présente invention ressortiront à la lecture de la description suivante de plusieurs exemples de réalisation de l'invention, donnés à titre illustratif et non limitatif en relation avec les dessins joints, parmi lesquels :

### Brève description des dessins

**Fig. 1**

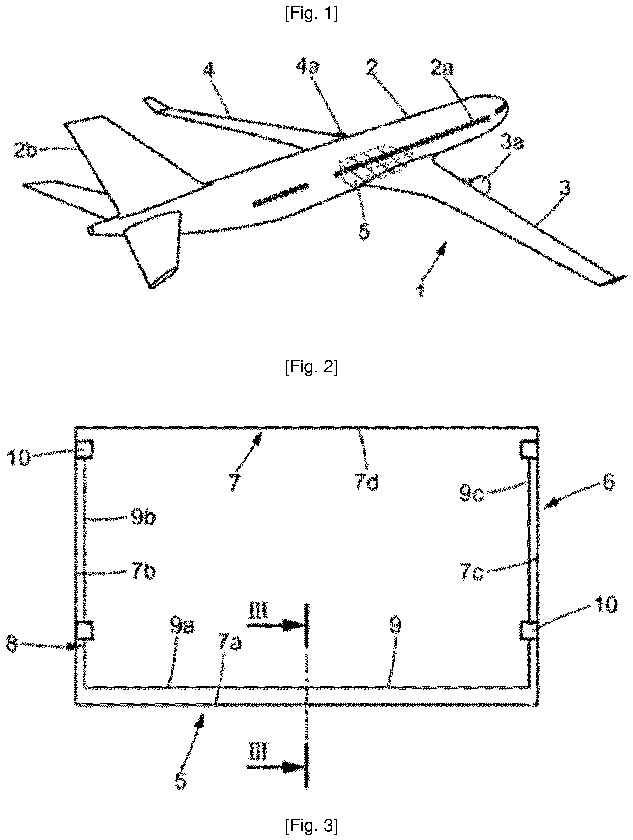

   [fig. 1] est une vue schématique en perspective d'un aéronef incorporant un réservoir de carburant selon un exemple de réalisation de l'invention.
**Fig. 2**
   [fig. 2] est une vue schématique en section transversale du réservoir de la figure 1 selon un exemple de l'invention, le réservoir étant équipé d'un dispositif de rétention.
**Fig. 3**

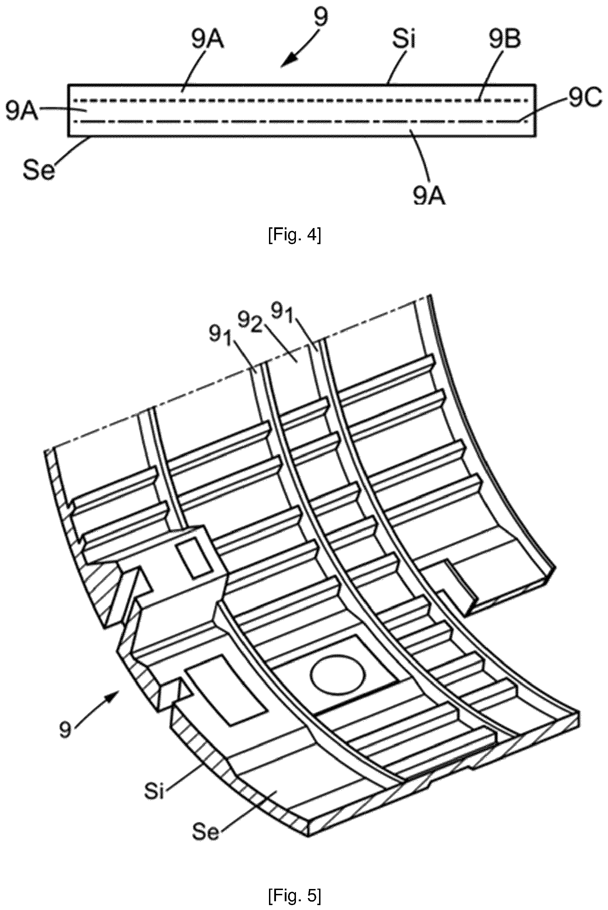

   [fig. 3] est une vue schématique, en section transversale dans le plan III-III de la figure 2, d'une structure composite flexible incluse dans un dispositif de rétention selon un exemple de l'invention.
**Fig. 4**
   [fig. 4] est une vue schématique partielle en perspective d'une structure composite flexible présentant l'architecture illustrée à la figure 3 une fois mise en forme, selon un exemple de réalisation de l'invention.
**Fig. 5**

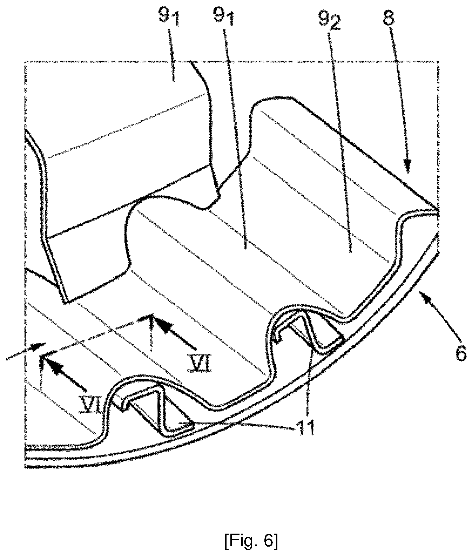

   [fig. 5] est une vue schématique partielle et en perspective d'un détail d'une structure composite flexible selon l'invention similaire à celle de la figure 4, mise en forme et déployée au plus près de la paroi d'un réservoir de carburant d'aéronef.
**Fig. 6**

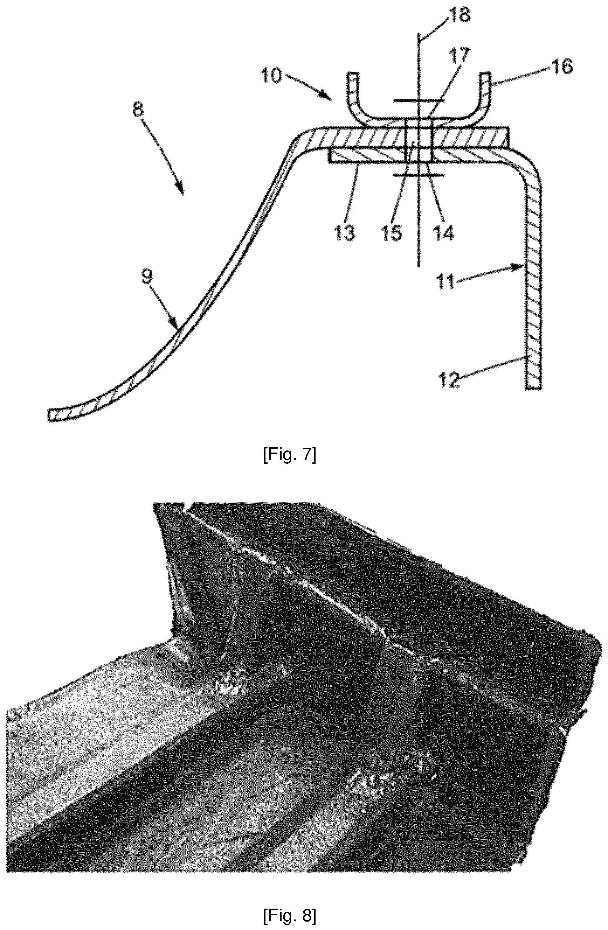

   [fig. 6] est une vue schématique partielle en coupe transversale suivant le plan VI-VI de la figure 5 des moyens de fixation de la structure composite flexible à la paroi du réservoir, selon un exemple de réalisation de l'invention.
**Fig. 7**
   [fig. 7] est une photographie d'une zone d'une structure composite flexible similaire à celle de la figure 4, selon un exemple de réalisation de l'invention également conforme à la figure 3.
**Fig. 8**

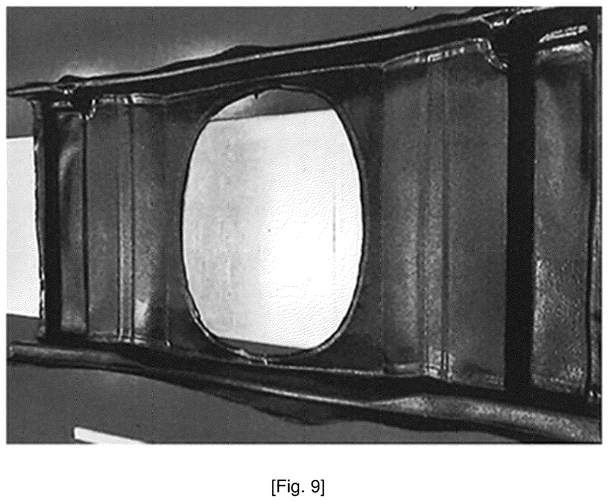

   [fig. 8] est une photographie d'une autre zone de la structure composite flexible selon l'exemple de la figure 7, montrant une ouverture d'accès à une trappe du réservoir.
**Fig. 9**

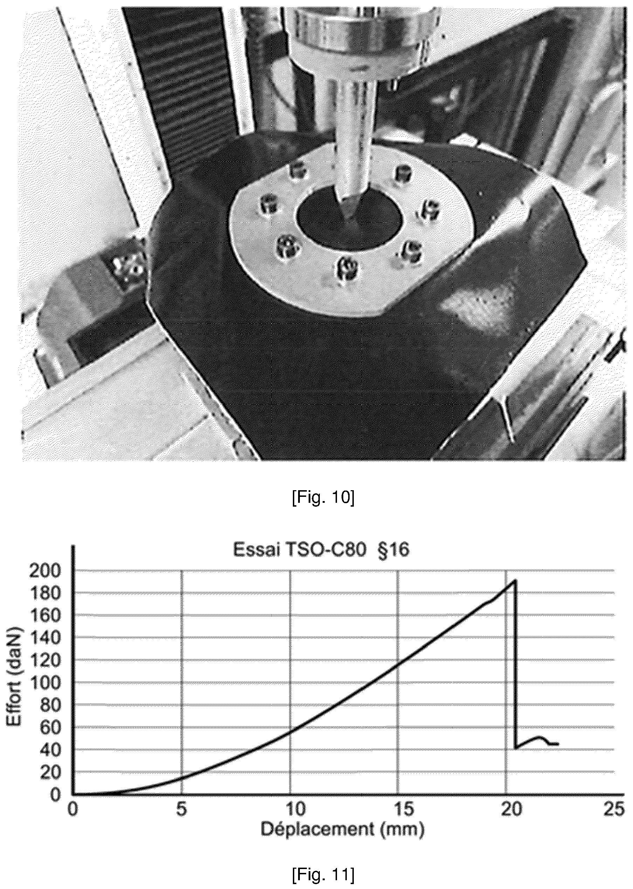

   [fig. 9] est une photographie montrant le dispositif de perforation utilisé pour mesurer la résistance à la perforation de la structure composite flexible des figures 7-8 selon la norme TSO-C80 § 16.
**Fig. 10**
   [Fig. 10] est un graphique effort = f (déplacement) obtenu pour la structure composite flexible selon l'invention des figures 7-8, suivant la norme TSO-C80 § 16.
**Fig. 11**

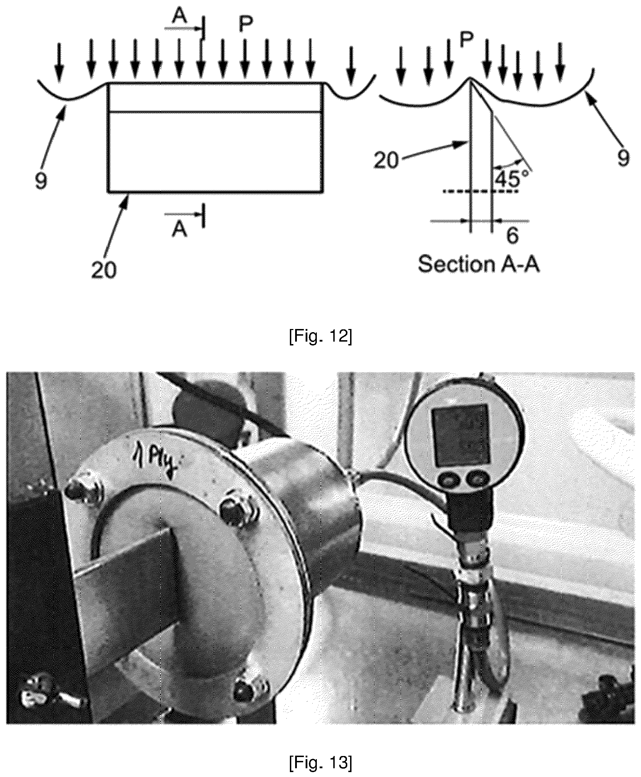

   [fig. 11] est un schéma illustrant le protocole suivi pour réaliser un test de résistance au cisaillement d'une structure composite flexible selon l'invention, telle qu'illustrée aux figures 7-8.
**Fig. 12**
   [fig. 12] est une photographie illustrant le dispositif de test utilisé pour mettre en oeuvre le test de résistance au cisaillement suivant la figure 11, pour la structure composite flexible selon l'invention.
**Fig. 13**

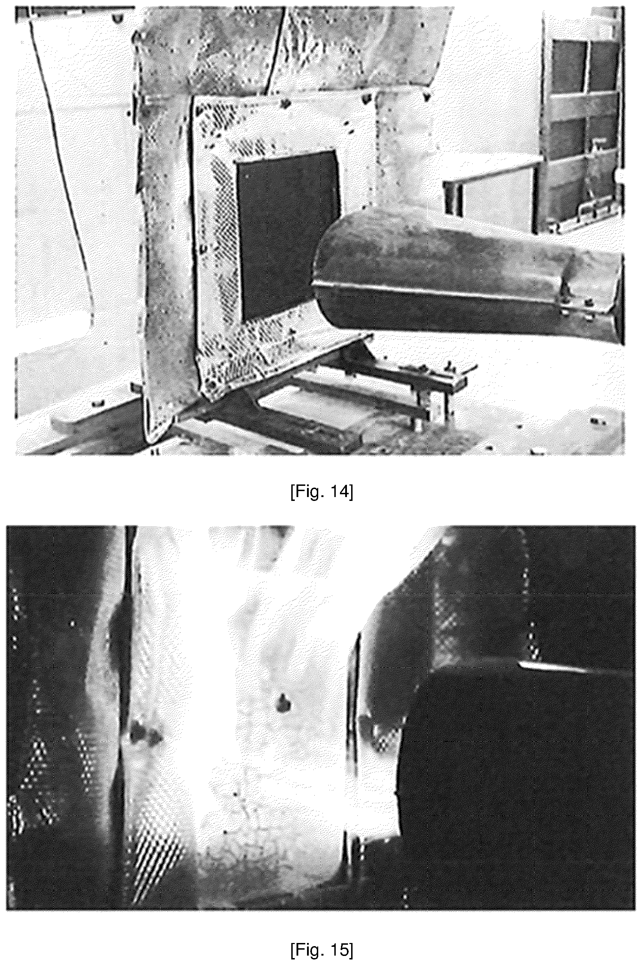

   [fig. 13] est une photographie montrant le dispositif utilisé pour mettre en oeuvre un test de résistance au feu d'une structure composite flexible selon un exemple de l'invention, telle qu'illustrée aux figures 7-8, test réalisé selon ISO 2685 :1998 ou AC 20-135 de la FAA, via un brûleur de carburant JET A-1.
**Fig. 14**
   [fig. 14] est une photographie montrant le procédé mis en oeuvre par le dispositif de la figure 13 pour ce test de résistance au feu, via l'allumage du brûleur.
**Fig. 15**

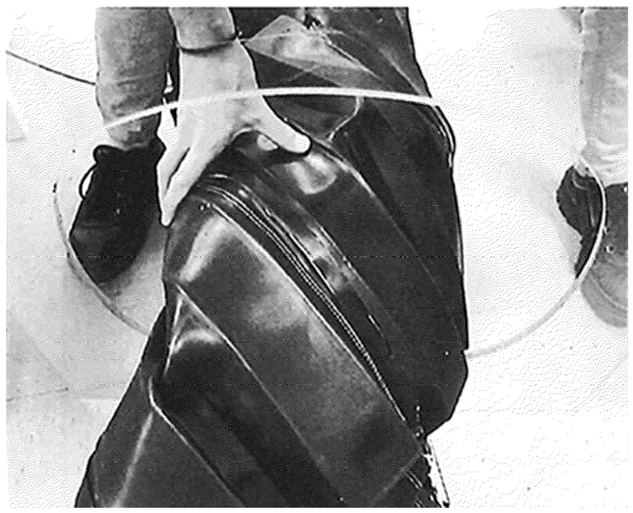

   [fig. 15] est une photographie montrant une structure composite flexible selon un exemple de réalisation de l'invention, telle que celle des figures 7-8, après mise en forme et dans une position repliée, avant insertion et déploiement à l'intérieur d'un réservoir d'aéronef.

### Exemples de réalisation de l'invention

L'aéronef 1 illustré à la figure 1 comprend un fuselage 2 délimitant une cabine 2a pour les passagers, des ailes 3 et 4 pourvues de réacteurs 3a et 4a, un empennage 2b, et un réservoir 5 de carburant logé à l'intérieur du fuselage 2, dans cet exemple à la jonction du fuselage 2 avec l'une des ailes 3.

Comme illustré à la figure 2, le réservoir 5 comprend :
- une paroi externe rigide 6 de type métallique ou composite, qui délimite un compartiment pour le carburant et qui présente une face interne 7, et
- un dispositif de rétention 8 (interne à la paroi 6) qui comprend une structure composite flexible 9 et des moyens de fixation 10 (représentés symboliquement à la figure 2, ces moyens 10 étant détaillés aux figures 5-6) pour fixer la structure 9 une fois mise en forme et déployée à la paroi 6, de telle manière que la structure 9 soit montée en fonctionnement normal de l'aéronef 1 à proximité immédiate de la face interne 7 (e.g. avec une distance moyenne entre structure 9 et face interne 7 de 1-10 mm, par exemple de 2-8 mm).

Le réservoir 5 de la figure 2 incorpore la structure 9 en regard et à proximité immédiate d'une zone de fond 7a de la face interne 7 et de zones latérales 7b, 7c de la face interne 7 s'étendant vers le haut à partir de la zone de fond 7a, étant précisé que dans l'exemple de la figure 2 la structure 9 ne s'étend pas en regard de la zone supérieure 7d de la face interne 7. En d'autres termes, la structure 9 une fois déployée à l'intérieur de la paroi 6 du réservoir 5 est ouverte en son côté supérieur, i.e. ne s'étendant que sur une partie de fond 9a et des parties latérales 9b, 9c de la structure 9, lorsque celle-ci présente comme à la figure 2 une géométrie tridimensionnelle globalement polyédrique, e.g. de type prismatique (i.e. de section transversale globalement polygonale, e.g. sensiblement rectangulaire).

Comme illustré à la figure 3, la structure 9 est délimitée par une surface interne Si (destinée à être tournée vers le carburant) et une surface externe Se (destinée à faire face à la paroi 6) et, selon l'invention, la structure 9 comprend :
- un corps élastomère 9A qui est constitué d'une composition de caoutchouc réticulée à base d'au moins un caoutchouc fluorosilicone (FVMQ) et dont les surfaces interne et externe sont respectivement formées par les surfaces Si et Se, et
- des armatures 9B et 9C qui sont encapsulées dans le corps élastomère 9A (i.e. noyées dans sa masse, étant distantes des surfaces Si et Se) et qui comprennent une armature de renforcement 9B et une armature antifeu 9C noyée dans le corps élastomère 9A à distance de l'armature de renforcement 9B.

Les armatures 9B et 9C peuvent s'étendre de manière continue ou discontinue sur la longueur et/ou sur la largeur du corps élastomère 9A, s'étendant chacune de préférence continûment sur sa longueur et la largeur du corps 9A (les tirets et pointillés visibles à la figure 3 sont conçus pour représenter deux armatures 9B et 9C distinctes, pas une discontinuité sur la largeur de la structure 9).

Comme également visible à la figure 3, l'armature antifeu 9C est située entre l'armature de renforcement 9B et la surface externe Se, i.e. l'armature de renforcement 9B est adjacente à la surface interne Si et l'armature antifeu 9C est adjacente à la surface externe Se.

La structure composite flexible 9 illustrée aux figures 4-5 et visible aux photographies des figures 7-8, est d'abord mise en forme (i.e. façonnée) de préférence par calandrage et moulage, de manière à présenter une géométrie tridimensionnelle complexe incluant des reliefs (e.g. nervures profilées 9₁) et des creux (e.g. rainures profilées 9₂ entre deux nervures 9₁) configurés pour s'adapter, une fois la structure 9 déployée et fixée à l'intérieur de la paroi rigide 6, au profil ou contour tridimensionnel de la face interne 7 de la paroi 6.

Une fois mise en forme, un opérateur replie la structure 9 grâce à sa flexibilité comme visible à la photographie de la figure 15, pour introduire réversiblement la structure 9 à l'état replié par une trappe d'accès à un trou d'homme ménagé dans la paroi 6, puis il fixe la structure 9 à la face interne 7 de cette paroi 6, comme illustré aux figures 5 et 6. On voit à la photographie de la figure 8 un trou d'homme dans la structure 9 configuré pour être disposé en regard du trou d'homme de la paroi 6, une fois la structure 9 fixée à la paroi 6.

Une fois introduite à l'intérieur de la paroi 6, l'opérateur positionne la structure 9 à proximité immédiate de sa face interne 7, de manière que la surface externe Se de la structure 9 épouse quasiment le contour de la face interne 7 à la fois sur sa zone de fond 7a et sur ses zones latérales 7b, 7c (voir figure 5). Dans l'exemple de la figure 5, la face interne 7 intègre des pattes de fixation 11 autour desquelles et entre lesquelles les nervures 9₁ et les rainures 9₂ de la structure 9 sont respectivement adaptées pour se positionner quasiment au contact de cette face interne 7, sur chacune des zones 7a, 7b, 7c.

Ces pattes de fixation 11 font partie des moyens de fixation 10 de la structure 9 à la paroi 6, et ces pattes 11 sont exemple en forme d'équerres (i.e. de section transversale sensiblement en double « L ») présentant chacune (figure 6) une branche externe 12 fixée sur la face interne 7 qui s'étend perpendiculairement au reste de la face interne 7, et une branche interne 13 qui prolonge la branche interne 12 à angle droit et qui présente des orifices de fixation 14.

Dans l'exemple de la figure 6, les moyens de fixation 10 comprennent en outre, vers l'intérieur de la structure 9, successivement :
- des oeillets de fixation 15 qui équipent la structure 9 et qui sont configurés pour être disposés en regard et au contact des orifices de fixation 14,
- des profilés de serrage 16 qui sont montés sur la structure 9 et qui présentent des ouvertures de serrage 17 configurées pour être disposées en regard et au contact des oeillets de fixation 15, et
- des boulons de serrage (identifiés par leur axe de symétrie 18) qui traversent successivement les pattes de fixation 11, la structure 9 et les profilés de serrage 16 via les orifices de fixation 14, les oeillets de fixation 15 et les ouvertures de serrage 17, respectivement.

La fixation par ces moyens 10 de la structure 9 à la face interne 7 de la paroi 6 permet à l'opérateur de réaliser simplement et efficacement le montage complet du dispositif de rétention 8 à l'intérieur de la paroi 6, et ainsi de finaliser la construction du réservoir 5, avant de le remplir du carburant d'aéronef.

On a rempli le réservoir 5 ainsi réalisé d'un carburant d'aviation durable « SAF » (« sustainable Aviation Fuel ») constitué de JET-A1, et comme détaillé ci-après, on a vérifié que le dispositif de rétention 8 selon l'invention qui était totalement immergé dans ce carburant à l'intérieur de la paroi 6, a permis de retenir le carburant de manière satisfaisante suivant une hauteur de carburant de 2 m environ, en présence d'une perforation de la paroi 6 du réservoir 5 sous forme d'un trou rectangulaire de 500 mm de longueur et 100 mm de largeur.

### Structure composite flexible fabriquée selon un exemple de l'invention :

On a préparé une composition de caoutchouc réticulable à base d'un caoutchouc fluorosilicone (FVMQ), la composition présentant la formulation détaillée au tableau 1 ci-après (fractions massiques des ingrédients dans la composition).

**[Tableau 1]**

| **Ingrédients** | **Fractions massiques** |
|---|---|
| Caoutchouc FVMQ | 83,9 % |
| Nanoparticules de carbone | 13,0 % |
| Additif antifeu | 0,9 % |
| Agent de réticulation (peroxyde organique) | 2,2 % |

On a procédé à la réticulation thermique de cette composition de caoutchouc réticulable, pour obtenir la composition de caoutchouc réticulée qui à l'état initial (i.e. avant vieillissement) et après vieillissement dans divers carburants aéronautiques respectivement constitués de JET A-1, de HEFA pur (acides gras et esters traités) et de HEFA additionné de divers composés aromatiques, présentait les propriétés mécaniques recensées aux tableaux 2 et 3 ci-après.

### Tests portant sur la composition de caoutchouc réticulée obtenue :

On a mesuré aux tableaux 2 et 3 la résistance à la rupture moyenne, l'allongement à la rupture moyen et les modules sécants M50, M100, M200 à 50 %, 100 % et 200 % de déformation en traction uni-axiale selon la norme ISO 37:2017. On a par ailleurs mesuré la dureté Shore A selon la norme ASTM D 2240.

On a mesuré au tableau 3 le gonflement de la composition, selon la norme NF ISO 1817, après vieillissement pendant 1000 h à 70° C dans les carburants JET A-1 (N°1), HEFA pur (N°2), et dans des fluides HEFA additionnés de composés :
- HEFA + 8 % de composés aromatiques : N°3,
- HEFA + 15 % de composés aromatiques : N°4,
- HEFA + 8 % de composés aromatiques + 10-12% de napthtènes : N°5,
- HEFA + 15 % de naphthènes : N°6.

**[Tableau 2]**

| **Propriétés initiales avant vieillissement** | **Valeurs** |
|---|---|
| Résistance à la rupture moyenne | 2,8 MPa |
| Allongement à la rupture moyen | 305 % |
| Module sécant M50 à 50 % de déformation | 1,0 MPa |
| Module sécant M100 à 100 % de déformation | 1,3 MPa |
| Module sécant M200 à 200 % de déformation | 2,0 MPa |
| Dureté Shore A à 15 secondes | 53 |

**[Tableau 3]**

| | | **Vieillissement pendant 1000 h à 70° C dans les fluides N°1 à N°6 précités** | | | | | |
|---|---|---|---|---|---|---|---|
| | Etat initial | N°1 | N°2 | N°3 | N°4 | N°5 | N°6 |
| **Résistance rupture** | | | | | | | |
| Moyenne en MPa | 2,8 | 1,5 | 1,7 | 1,6 | 1,6 | 1,5 | 1,6 |
| Ecart-type en MPa | 0,1 | 0,1 | 0,05 | 0,04 | 0,08 | 0,3 | 0,09 |
| **Variation en %** | | **-46** | **-39** | **-43** | **-43** | **-46** | **-43** |

| **Allongement rupture** | | | | | | | |
|---|---|---|---|---|---|---|---|
| Moyenne en % | 305 | 176 | 181 | 190 | 177 | 156 | 167 |
| Ecart-type en % | 12 | 21 | 18 | 8 | 12 | 23 | 13 |
| **Variation en %** | | **-42** | **-41** | **-38** | **-42** | **-49** | **-45** |

| **Modules (MPa)** | | | | | | | |
|---|---|---|---|---|---|---|---|
| M50 | 1,0 | 1,7 | 0,8 | 0,8 | 0,8 | 0,8 | 0,8 |
| M100 | 1,3 | 1,1 | 1,1 | 1,1 | 1,1 | 1,1 | 1,2 |
| M200 | 2,0 | 1,6 | 1,7 | 1,4 | - | - | - |

| **Gonflement volumique** | | | | | | | |
|---|---|---|---|---|---|---|---|
| en sortie de fluide | | **28** | **22** | **25** | **25** | **27** | **25** |

| **Gonflement massique** | | | | | | | |
|---|---|---|---|---|---|---|---|
| en sortie de fluide | | 16 | 12 | 13,7 | 14,2 | 14,9 | 13,6 |

| **Gonflement volumique** | | | | | | | |
|---|---|---|---|---|---|---|---|
| en sortie de fluide après | | 0 | -1 | -1 | -1 | -1 | -1 |
| **séchage 24 h à 100° C** | | | | | | | |
| **Dureté Shore A** à 15" | 53 | 34 | 37 | 39 | 38 | 35 | 37 |
| Variation Shore (points) | | **-19** | **-16** | **-14** | **-15** | **-18** | **-16** |

On ainsi constaté, suite à ce vieillissement thermique dans ces fluides :
- une diminution de la résistance à la rupture et de l'allongement à la rupture de moins de 50 %,
- une diminution des modules à 50 %, 100 % et 200 % de moins de 50 %,
- un gonflement en sortie de fluide, selon la norme NF ISO 1817, inférieur à 30 % (en volumique) et inférieur à 20 % (en massique), et
- une diminution de dureté Shore A à 15 secondes inférieure à -20 points.

Par conséquent, le tableau 3 montre que la composition de caoutchouc utilisée pour former le corps élastomère 9A de la structure composite flexible 9 selon l'invention présentait une résistance satisfaisante au gonflement, du fait que ses propriétés mécaniques n'étaient pas significativement pénalisées après vieillissement thermique du corps 9A dans des carburants d'aéronefs.

### Confection des armatures de renforcement 9B et antifeu 9C :

En vue d'obtenir la structure composite flexible 9, on a confectionné l'armature de renforcement 9B en utilisant une nappe tissée d'aramide comme indiqué ci-après. Plus précisément, la nappe tissée d'aramide était constituée de fils continus de PPTA (para-aramide, ou poly(paraphénylène téréphtalamide)) qui présentaient une masse linéique égale à 1680 tex. Cette nappe d'aramide présentait, à l'état tissé (tissage 1/1 avec 8,5-10,5 fils de chaîne/trame) :
- laize de 155 cm, mesurée selon ISO 2286-1 ;
- une masse surfacique de 290 g/m², mesurée selon ISO 9073-1 ;
- une épaisseur de 0,5 mm, mesurée selon ISO 5084 ;
- une résistance à la rupture en traction dans les sens de chaîne et de trame, respectivement de 1150 et 1250 daN/5 cm, mesurée selon ISO 13 934-1 ; et
- une résistance à l'éclatement de 18.10⁵ Pa, mesurée selon ISO 13 938-1.

On a par ailleurs confectionné l'armature antifeu 9C en utilisant une nappe tissée de silice, comme indiqué ci-après. Plus précisément, la nappe de silice était constituée de fils continus de silice (comprenant plus de 95 % de fibres de SiO₂) de diamètre 6 µm. Cette nappe de silice présentait, à l'état tissé et imprégné :
- une température maximale d'utilisation de 800° C en continu,
- une laize de 120 cm, mesurée selon ISO 2286-1,
- une masse surfacique de 300 g/m², mesurée selon ISO 3801,
- une épaisseur de 0,44 mm, mesurée selon ISO 5084,
- une résistance à la rupture en traction dans les sens de chaîne et de trame, respectivement de 822 N/ 25 mm (32,8 kN/m) et 650 N/25 mm (26 kN/m), mesurée selon ISO 4606,
- un allongement à la rupture, dans les sens de chaîne et de trame, respectivement de 6 % et 7 %, mesuré selon ISO 13 934-1, et
- une résistance à l'éclatement de 792 kPa (diamètre d'éprouvette de 30,5 mm), selon ISO 13 938-1.

On a façonné par calandrage et moulage la structure composite flexible 9 incorporant les armatures 9B et 9C en noyant les deux nappes tissées d'aramide et de silice les constituant dans le corps élastomère 9A, obtenant ainsi la structure 9 tridimensionnelle mise en forme.

### Résistance à la perforation et au cisaillement de la structure 9 ainsi obtenue :

On a testé la résistance à la perforation (« puncture résistance » en anglais) de la structure composite flexible 9 ainsi façonnée selon la norme TSO-C80 § 16, au moyen du dispositif illustré à la figure 9. Comme visible sur le graphique de la figure 10, les résultats obtenus en termes de caractéristique effort (daN) = f (déplacement mm) témoignaient d'une résistance à la perforation obtenue d'environ 1900 N (voir la chute de l'effort mesuré à 190 daN), résistance nettement supérieure à la valeur minimale requise de 1646 N.

On a en outre testé la résistance au cisaillement de la structure composite flexible 9 ainsi façonnée, en suivant le protocole expérimental illustré aux figures 11-12, i.e. en appliquant des contraintes de cisaillement sur une unité de surface (i.e. contraintes représentatives d'une pression) au moyen d'une plaque métallique 20 de 6 mm d'épaisseur, dont l'inclinaison variait suivant un angle allant jusqu'à 45° pour simuler un cisaillement, et contre laquelle venait appuyer la surface externe Se d'un échantillon de la structure 9 monté mobile en translation (voir flèches P parallèles à la figure 11). On a finalement obtenu une tenue au cisaillement de la structure 9, grâce à la nappe tissée d'aramide, à une pression allant jusqu'à 50000 Pa (500 mbar), tenue très supérieure au minimum requis de 18000 Pa (180 mbar).

Ces résultats montrent que la structure composite flexible 9 selon l'invention était capable de résister de manière satisfaisante à des contraintes générées par des arêtes tranchantes des bords d'un trou résultant d'une perforation de la paroi rigide externe 6 d'un réservoir 5 de carburant. En particulier, la nappe d'aramide a permis de conférer à la structure 9 une résistance suffisante à la pression du carburant et au déchirement du fait du contact de la structure 9 avec ces arêtes tranchantes de la paroi 6 perforée du réservoir 5.

### Résistance au feu et étanchéité de la structure 9 après exposition au feu :

Comme visible aux figures 13-14, on a utilisé un dispositif à brûleur de carburant pour mettre en oeuvre un test de résistance au feu de la structure 9 selon selon la norme ISO 2685 :1998 ou la norme AC 20-135 de la FAA, via un brûleur de carburant JET A-1. On a finalement obtenu une résistance au feu via ce brûleur égale à 5 minutes, qui est notamment procurée par la nappe antifeu de silice.

On a ensuite évalué l'étanchéité de la structure 9 par un taux de fuite à l'eau, via l'utilisation d'une colonne d'eau projetée sur la structure 9 après que cette structure 9 a été soumise à une flamme de kérosène de 92 kW/m² pendant 5 minutes. On en a conclu que la structure 9 demeurait étanche à l'eau ainsi projetée, même après exposition à cette flamme calibrée de kérosène.

### Autres propriétés mesurées de la structure 9 et conclusion :

On a vérifié que la structure 9 confectionnée selon les figures 3 et 7-8 était durablement flexible à des températures variant de -55 à 80° C, que les nanoparticules de carbone permettaient d'assurer la dissipation des charges électrostatiques (résistivité électrique surfacique mesurée inférieure à 10 GΩ.carré), et que cette structure 9 était non inflammable selon la norme FAR 25-853 Appendix F partie 1 en test d'inflammabilité verticale selon (a1)(ii) et horizontale selon (a1)(iv): pendant 12 secondes et 15 secondes d'inflammation, respectivement.

En conclusion, la Demanderesse a établi qu'une structure composite flexible selon l'invention présente notamment des propriétés très satisfaisantes de flexibilité, de durée de vie, de résistance aux carburants d'aéronefs tant à des températures hautes que basses, de résistance aux perforation et au feu, d'étanchéité ainsi que de dissipation des charges électrostatiques, propriétés qui lui permettent de suivre durablement le profil de la paroi rigide externe du réservoir de carburant en minimisant ainsi le risque de fuite initiale d'une grande quantité de carburant, tout en retardant et réduisant la fuite de carburant dans le temps, et cela pendant une durée de vie du dispositif de rétention incorporant la structure composite flexible estimée à au moins douze ans.

## Revendications

1. Structure composite flexible (9) configurée pour former à l'état déployé un dispositif de rétention (8) d'un carburant d'aéronef (1), le dispositif de rétention (8) étant monté à l'intérieur et à distance d'une paroi (6) d'un réservoir (5) d'aéronef (1) contenant le carburant, de sorte qu'en cas de perforation de la paroi (6), le dispositif de rétention (8) retarde ou réduise la fuite de carburant hors du réservoir (5),
la structure composite flexible (9) présentant une surface interne (Si) destinée à être au contact du carburant et une surface externe (Se), et étant configurée après mise en forme et déploiement pour que la surface externe (Se) soit montée à proximité immédiate et en suivant le contour de la paroi (6) du réservoir (5),
la structure composite flexible (9) comprenant un corps élastomère (9A) constitué d'une composition de caoutchouc et une armature de renforcement (9B) noyée dans le corps élastomère (9A),
dans laquelle la structure composite flexible (9) comprend en outre une armature antifeu (9C) qui est noyée dans le corps élastomère (9A) à distance de l'armature de renforcement (9B), la composition de caoutchouc étant à base d'au moins un caoutchouc fluorosilicone.

2. Structure composite flexible (9) selon la revendication 1, dans laquelle l'armature antifeu (9C) est située entre l'armature de renforcement (9B) et la surface externe (Se).

3. Structure composite flexible (9) selon une des revendications précédentes, dans laquelle la surface interne (Si) et la surface externe (Se) sont constituées de la composition de caoutchouc.

4. Structure composite flexible (9) selon une des revendications précédentes, dans laquelle l'armature de renforcement (9B) comprend au moins une nappe de renforcement textile qui est tissée ou tricotée, de préférence tissée à partir d'un fil continu et satisfaisant à l'une au moins des conditions suivantes :
- une masse surfacique d'au moins 250 g/m², mesurée selon ISO 9073-1 ;
- une résistance à la rupture en traction dans les sens de chaîne et de trame, respectivement d'au moins 1100 daN/5 cm et 1200 daN/5 cm, mesurée selon ISO 13 934-1 ; et
- une résistance à l'éclatement d'au moins 15.10⁵ Pa, mesurée selon ISO 13 938-1.

5. Structure composite flexible (9) selon la revendication 4, dans laquelle ladite au moins une nappe de renforcement comprend des fibres d'un polyamide (semi) aromatique, de préférence choisi parmi les polyarylamides, les poly(métaxylylène adipamide), les polyphtalamides, les polyamides semi-aromatiques amorphes, les méta-aramides, les para-aramides et leurs combinaisons.

6. Structure composite flexible (9) selon une des revendications précédentes, dans laquelle l'armature antifeu (9C) comprend au moins une nappe antifeu minérale de type tissée ou tricotée qui satisfait à l'une au moins des conditions suivantes, étant de préférence tissée et satisfaisant à l'une au moins des conditions suivantes à l'état imprégné :
- une masse surfacique d'au moins 250 g/m², mesurée selon ISO 3801 ;
- une résistance à la rupture en traction dans les sens de chaîne et de trame, respectivement d'au moins 800 N/ 25 mm et d'au moins 600 N/25 mm, mesurée selon ISO 4606 ;
- un allongement à la rupture, dans les sens de chaîne et de trame, respectivement d'au moins 4 % et 5 %, mesuré selon ISO 13 934-1 ; et
- une résistance à l'éclatement d'au moins 750 kPa pour un diamètre d'éprouvette de 30,5 mm, mesurée selon ISO 13 938-1.

7. Structure composite flexible (9) selon la revendication 6, dans laquelle ladite au moins une nappe antifeu comprend des fibres de silice et/ou d'une céramique, de préférence un fil continu de silice selon une fraction massique de SiO₂ supérieure à 95 % dans ladite au moins une nappe.

8. Structure composite flexible (9) selon une des revendications précédentes, dans laquelle la composition de caoutchouc comprend:
- ledit au moins un caoutchouc fluorosilicone, par exemple selon une fraction massique de 80 à 88 %,
- des charges électriquement conductrices comprenant par exemple des nanoparticules de carbone, de préférence selon une fraction massique de 10 à 15% ;
- un système retardateur de flamme, de préférence selon une fraction massique de 0,5 à 2 % ; et
- un système de réticulation par exemple au peroxyde, de préférence selon une fraction massique de 0,5 à 5 %.

9. Structure composite flexible (9) selon une des revendications précédentes, dans laquelle la composition de caoutchouc satisfait, à l'état réticulé, à l'une au moins des conditions suivantes :
- une résistance à la rupture moyenne d'au moins 2,5 MPa, mesurée en traction uni-axiale selon la norme ISO 37:2017,
- un allongement à la rupture moyen d'au moins 300 %, mesuré en traction uni-axiale selon la norme ISO 37:2017,
- des modules sécants à 50 %, 100 % et 200 % de déformation respectivement d'au moins 0,8 MPa, 1,0 MPa et 1,8 MPa, mesurés en traction uni-axiale selon la norme ISO 37:2017, et
- une dureté Shore A comprise entre 50 et 60, mesurée selon mesurée selon la norme ASTM D 2240.

10. Structure composite flexible (9) selon une des revendications précédentes, dans laquelle la structure composite flexible (9) satisfait, à l'état réticulé, à l'une au moins des conditions suivantes :
- une résistance à la perforation selon TSO-C80 § 16, qui est supérieure à 1650 N ;
- une résistance au feu selon ISO 2685 :1998 ou AC 20-135 de la FAA via un brûleur de carburant JET A-1 qui est d'au moins 5 minutes ;
- une étanchéité mesurée par un taux de fuite à l'eau, après avoir été soumise à une flamme de kérosène de 92 kW/m², qui est d'au moins 5 minutes ;
- une durée non inflammable selon FAR 25-853 Appendix F partie 1 en test d'inflammabilité verticale selon (a1)(ii) et horizontale selon (a1)(iv), qui est d'au moins 12 secondes et d'au moins 15 secondes d'inflammation, respectivement;
- une résistivité électrique surfacique qui est inférieure à 10 GΩ.carré ; et
- après vieillissement pendant 1000 heures à 70° C dans un carburant JET A-1, un gonflement en sortie de fluide, selon la norme NF ISO 1817, qui est inférieur à 30 % en volumique et qui est inférieur à 20 % en masse.

11. Dispositif de rétention (8) d'un carburant d'aéronef (1), le dispositif de rétention (8) étant configuré pour être monté à l'intérieur et à distance d'une paroi (6) d'un réservoir (5) d'aéronef (1) contenant le carburant, de sorte qu'en cas de perforation de la paroi (6), le dispositif de rétention (8) baignant dans le carburant retarde ou réduise la fuite de carburant hors du réservoir (5),
dans lequel le dispositif de rétention (8) comprend :
- une structure composite flexible (9) selon une des revendications précédentes mise en forme, par exemple par calandrage et moulage, puis déployée suivant le contour d'une face interne (7) de la paroi (6), et
- des moyens de fixation (10) de la structure composite flexible (9) à la face interne (7) de la paroi (6), les moyens de fixation (10) comprenant de préférence, de la paroi (6) du réservoir (5) vers l'intérieur de la structure composite flexible (9) :
des pattes de fixation (11) par exemple en forme d'équerre qui sont fixées sur une face interne (7) de la paroi (6) du réservoir (5) et qui présentent des orifices de fixation (14),
des oeillets de fixation (15) qui équipent la structure composite flexible (9) et qui sont configurés pour être disposés en regard et au contact des orifices de fixation (14),
des profilés de serrage (16) qui sont montés sur la structure composite flexible (9) et qui présentent des ouvertures de serrage (17) configurées pour être disposées en regard et au contact des oeillets de fixation (15), et
des organes mâles de serrage (18), tels que des boulons, qui traversent successivement les pattes de fixation (11), la structure composite flexible (9) et les profilés de serrage (16) via les orifices de fixation (14), les oeillets de fixation (15) et les ouvertures de serrage (17), respectivement.

12. Dispositif de rétention (8) selon la revendication 11, dans lequel la structure composite flexible (9), une fois mise en forme et déployée, présente :
- une ouverture d'accès de type trou d'homme configurée pour être positionné en regard d'une trappe d'accès équipant la paroi (6) du réservoir (5), et
- une aptitude à être repliée et/ou enroulée de manière réversible pour la faire passer par l'ouverture d'accès de type trou d'homme, puis pour la déployer à l'intérieur du réservoir (5).

13. Réservoir (5) de carburant configuré pour équiper un aéronef (1) comprenant un fuselage (2) à l'intérieur duquel est prévue une cabine (2a), le réservoir (5) comprenant :
- une paroi externe rigide (6) de type métallique ou composite, qui délimite un compartiment pour le carburant, et
- un dispositif de rétention (8) selon la revendication 11 ou 12, dans lequel le dispositif de rétention (8) est maintenu par lesdits moyens de fixation (10) à proximité immédiate de la paroi (6) avec un espacement moyen entre la surface externe (Se) de la structure composite flexible (9) et la face interne (7) de la paroi (6) qui est compris entre 1 mm et 10 mm, de préférence entre 2 mm et 8 mm.

14. Réservoir (5) de carburant selon la revendication 13, dans lequel le dispositif de rétention (8) est ouvert en l'un au moins de ses côtés en regard de la paroi (6) du réservoir (5), le dispositif de rétention (8) étant agencé en regard d'une zone de fond (7a) et de zones latérales (7b, 7c) de la paroi (6) et étant de préférence ouvert en regard d'une zone supérieure (7d) de la paroi (6), ladite zone supérieure (7d) étant configurée pour être disposée à l'intérieur du fuselage (2) de l'aéronef (1) et en dessous de la cabine (2a).

15. Aéronef (1) comprenant un fuselage (2), des ailes (3 et 4) et au moins un réservoir (5) de carburant qui est logé à l'intérieur du fuselage (2), de préférence à la jonction du fuselage (2) avec l'une des ailes (3), dans lequel ledit au moins un réservoir (5) est tel que défini à la revendication 13 ou 14 et présente par exemple une zone latérale (7b, 7c) de ladite paroi (6) qui est délimitée par le fuselage (2) ou est adjacente au fuselage (2).
